# EUROPEAN PATENT SPECIFICATION

(11) **EP 3 027 076 B1**
(45) Date of publication and mention of the grant of the patent: **13.04.2022**
(21) Application number: 14777809.6
(22) Date of filing: 30.07.2014
(51) Int. Cl.: B32B 7/06, B32B 7/12, B32B 27/08, B32B 27/22, B32B 27/30, B32B 27/32, C09J 153/02

(54) **REVERSIBLE FASTENING DEVICE**
UMKEHRBARE BEFESTIGUNGSVORRICHTUNG
DISPOSITIF DE FIXATION RÉVERSIBLE

(30) Priority: 02.08.2013 IT MI20131326
(43) Date of publication of application: 08.06.2016
(73) Proprietor: FAIT PLAST S.p.A., 25060 Cellatica (Prov. of Brescia) (IT)
(72) Inventor: ARICI, Andrea, I-25064 Gussago (BS) (IT); ARICI, Guido, I-25030 Castel Mella (BS) (IT); DELLA PUPPA, Stefano, I-20081 Abbiategrasso (MI) (IT)
(74) Representative: Marturano, Pasqualino
(86) International application number: PCT/IB2014/063546
(87) International publication number: WO 2015/015435

(56) References cited:
- EP-A1- 3 020 773
- WO-A1-2009/137588
- US-A- 5 378 536
- US-A1- 2005 147 813
- US-A1- 2008 107 861
- KARL-FRIEDRICH ARNDT ET AL: "4 Molmasse und Molmassenbestimmung", 1 January 1996 (1996-01-01), POLYMERCHARAKTERISIERUNG, CARL HANSER VERLAG, MÜNCHEN WIEN, PAGE(S) 92-107, XP002583664, ISBN: 978-3-446-17588-4 * chapter 5.3.2.4; page 98; table 4.1 *

## Description

The present invention concerns a reversible fastening device, through film, the use of which is particularly effective on items for the textile field, of leather goods, hygiene-sanitation, sport and for some household products.

The film-like fastening device, object of the present invention, reversibly adheres to itself, or possibly to other surfaces having a similar chemical composition. The fastening, and the subsequent detachment, can be carried out repeatedly a large number of times.

The fastening device is particularly suitable for fastening, in a reversible manner, items such as clothing items and clothing accessories, garments, shoes, bags, logos, posters, paintings, photos etc..

At the state of the art different systems are known that make it possible to reversibly fasten two items or two portions of a same item (for example, two hems of a garment or of a bag) to one another. With these systems the items can be rapidly fastened (system closed) and released (system open) a large number of times. These systems are also known as reclosable fastening systems.

One reclosable system of the mechanical type is the "loop and hook" system known on the market with the brand Velcro^{®}. This closing system essentially comprises two semi-rigid supports, in general in the form of a strip, the first provided with a plurality of hooks, the second provided with a plurality of loops. Each of the two supports is applied in a permanent manner to one of the two items to be fastened (or portions of the same item). The coupling of the surfaces containing the loops and the hooks, obtained by placing these in contact with one another and by exerting moderate pressure, leads to the closure of the device and therefore, to the reversible fastening of the items.

This closing system, has found particular application in the field of clothing (garments, shoes, bags, etc.) as an alternative to conventional closing systems with eyelet and button or zippers, even though, differently from these, it has an annoying, and unavoidable, noise, especially when being opened.

Some of such conventional devices are not without further drawbacks among which not being easy to open and close, to the point of requiring particular manual dexterity to be opened and/or closed (e.g. buttons, clips, zippers located in places that are difficult to reach).

A further drawback of such closing devices of the known type consists in the fact that in the case in which they are applied on fabric that is provided with elastic properties they do not stretch and do not follow the deformation of the support fabric.

Despite being effective, the loop and hook devices have further drawbacks, in particular when they are used as systems for closing fabric items. The hook portions, for example, tend to get caught on the fabric leading to fraying; moreover, indeed, due to the threads tangled up between the hooks and to the extra material that, in general, can remain hooked to the two elements of the device, the fastening system progressively becomes less effective.

The threads caught and the extra parts held by the fastening systems, moreover, are difficult to remove when washing the clothing garments; consequently, the accidental interaction between the fastening element and the fabric, even when it does not damage the latter, can in any case cause the fastening to occur according to undesired methods.

Moreover, such devices, being rigid, can be annoying and uncomfortable in different applications, especially in the clothing field.

At the state of the art reclosable fastening systems of the non-mechanical type are also known, in which the coupling of the two fastening elements exploits the adhesive properties belonging to materials used for making the system.

Patents EP 0690897 B1 (EP'897) and US 5,888,335 (US'335) describe numerous examples of fastening devices that are sensitive to contact comprising one or more elements of a polymer material selected among urethane polymers, copolymers of ethylene, butyl rubber, butadiene-acrylonitrile copolymers (BACN) and butadiene-acrylonitrile-isoprene copolymers (BACNI), styrene-isoprene-styrene (SIS) and styrene-butadiene-styrene (SBS) block copolymers and mixtures thereof. The fastening systems described in this patent are substantially non-tacky.

It is not possible to understand, even with the numerous examples of polymer compounds shown in patents EP'897 and US'335, any preferential criterion, for this or that of the numerous combinations claimed, in relation to any of the critical elements shown above.

US 5378536 A relates to an adhesive of certain elastomeric block copolymers and tackifying materials that can be hot-melt coated onto a flexible backing to provide an adhesive tape, two pieces of which can bond to each other to have excellent resistance to shear forces but can be easily peeled apart, even after prolonged periods of time.

WO 2009/137588 A1 relates to a flexible package having a reclosable fastener with opposing front and back panels joined together to form a cavity. The reclosable fastener including opposing cohesive layers supplied from a solvent dispersion of a thermoplastic elastomer and diluent disposed on each of the front and back panels effective to form a reclosable fastener having a cohesive peel strength less than the bond strength to the front and back panels.

US 2008/107861 A1 relates to non-tacky adhesive fastening systems, which include non-tacky patterned adhesive systems and non-tacky three-dimensional adhesive systems. In a non-tacky adhesive fastening system, an engaging member including a non-tacky adherent is engageable with a receiving member including a non-tacky adherend. In a non-tacky patterned adhesive system, at least one of the engaging member and receiving member has the adherent/adherend disposed thereon in a patterned fashion.

The Applicant, moreover, is not aware of the existence of other same, similar, equivalent or products that can substitute it on the market to the film for reversible closing systems object of the present invention.

The Applicant has now found formulas that are based on thermoplastic polymers which are capable of giving innovative characteristics to reversible fastening systems, which can be applied for example to textile items, leather goods or clothing garments, in which it is possible to adjust the performance as desired based upon different application and functional requirements.

The Applicant has thus faced the problem of providing a fastening device between two opposite portions, belonging for example to a same item made from textile material.

More in particular, a first purpose of the present invention is that of providing a fastening device between two opposite portions that makes it possible to reversibly join said portions and to subsequently detach them through the application of a moderate force, wherein such attachment and detachment actions can be carried out in a simple and rapid manner a large number of times without losing its fastening effectiveness.

Another purpose of the present invention is that of providing a reversible fastening device the fastening elements of which are capable of adhering to each other, but not to other surfaces with which they could accidentally come into contact, in particular that substantially do not adhere to fabrics, leather, wadding and to natural or synthetic fur.

A further purpose of the present invention is that of providing a reversible fastening device that can undergo repeated washing, using common detergent for clothing garments or other items made from textile material, without a significant loss of its self-adhesive characteristics.

A further purpose of the present invention is to provide a reversible fastening device the self-adhesive properties of which substantially remain unaltered following exposure to weather (in particular to UV radiation) and to repeated change in temperature.

A further purpose of the present invention is that of providing a reversible fastening device which, once it has been fastened to an elastic substrate, it is capable of following the deformations that the substrate can be subjected to during use.

A further purpose of the present invention is that of providing a reversible fastening device, the opening and closing of which substantially produces no noise.

These and other purposes of the present invention, among which the absence of a base colour and the substantial impermeability of the film, can be obtained through a fastening device between two opposite portions as defined in claim 1.

The present invention shall be illustrated in the rest of the description with reference to the attached figures, in which:
figure 1 represents one embodiment of a fastening device in accordance with the present invention, according to a perspective view;
figure 2 represents a clothing item that includes a plurality of fastening devices in accordance with the present invention;
figure 3 represents an embodiment of a closing element 10 of a sample (test piece 40) of a fastening device according to the present invention, according to a perspective and schematic view;
figure 4 represents one embodiment of a sample (test piece 40) to be subjected to measurement of the peeling force, according to a perspective and schematic view;
figure 5 is an example of a graph of the stroke (mm)/load (N) that can be obtained by measuring the peeling force.

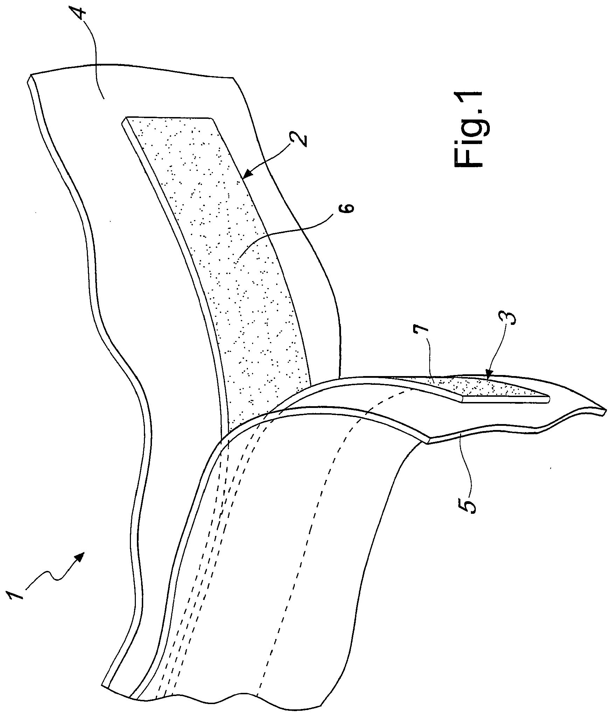

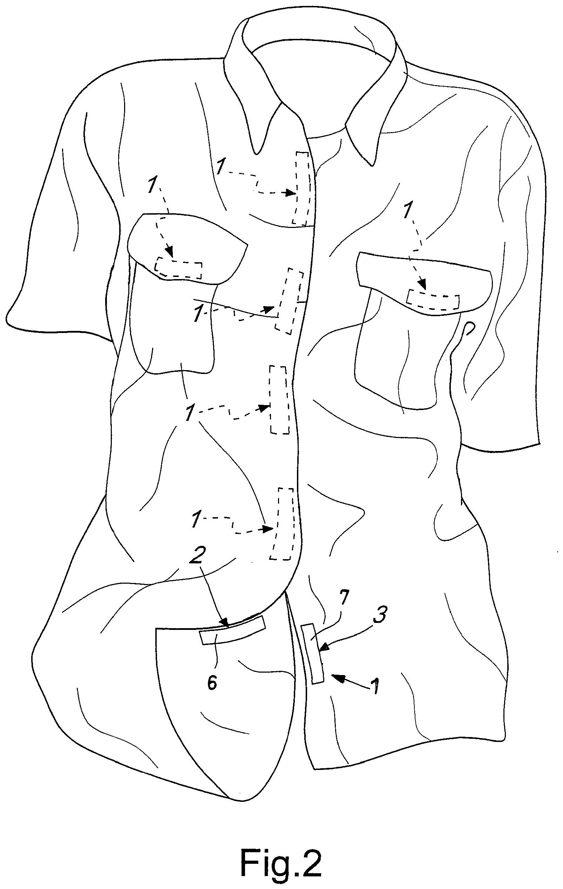

According to a first aspect, the present invention concerns a fastening device for fastening two opposite portions as represented in the perspective view of figure 1. The fastening device, wholly indicated with reference numeral 1, comprises at least two closing elements 2 and 3 which are stably located respectively on at least two hems 4 and 5 of a support 6, like for example, a shirt with pockets, like in the example illustrated in figure 2, but also a jacket, an armhole, a neck garment fastener or a size adjuster in caps with a visor or the like. Such closing elements 2 and 3, in the example indicated, are each made by a tape 7 made from a reversible self-adhesive polymer material. By the expression reversible self-adhesive we mean the property of the polymer material repeatedly adhering for a large number of times to itself or to other materials with a similar chemical composition and, not significantly to materials of a different type such as, for example, fabrics, wadding, leather, natural and synthetic fur.

The force to be applied in order for there to be the detachment between said closing elements, applied in the direction that is perpendicular to the surfaces adhered together and with a reference detachment speed equal to 300 mm/min, is comprised between 0.005 N/mm and 0.5 N/mm, preferably between 0.01 N/mm and 0.15 N/mm.

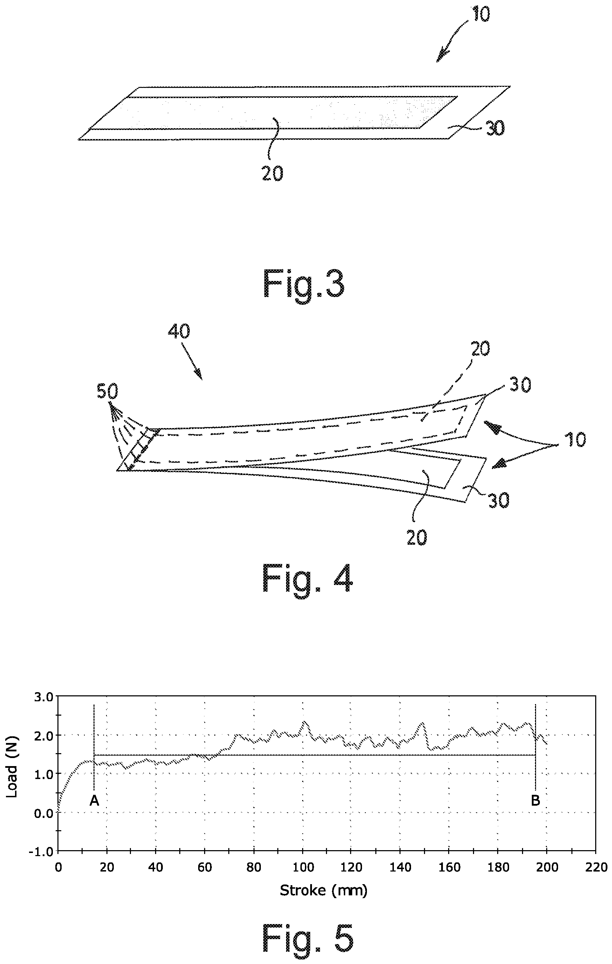

The peeling force values at 90° reported in the present description and in the attached claims are defined according to the procedure described hereinafter with reference to Figures 3 and 4 (peeling test).

The material according to the present invention is extruded in the form of a tape with a thickness equal to around 400 µm. Adhesive strips 20 having dimensions of around 40×150 mm are obtained from the tape. With the help of a flat press with a heated upper plate (at T = 160°C, pressure 1.5 bar, press time = 20 sec) each strip 20 is fastened to a tape of fabric made from polyester 30 with dimensions of around 50x180 mm, so as to form a closing element 10 of the fastening device according to the present invention. Two identical closing elements are assembled with one another, through clips 50, at one of the short sides, thus obtaining a test piece 40 in which the adhesive strips 20 mutually face one another as illustrated in figure 4. The strips 20 (test piece closed) are adhered together by subjecting the test piece 40, arranged on a horizontal flat, rigid and smooth surface, to a weight of 1 kg that is evenly distributed, corresponding to a press force that is equal to 0.0166 kgf/cm², equal to around 0.016 bar. The pressing force is maintained for 30 s at room temperature (22°C). In order to measure the peeling force at 90°C, the hems that are free from the polyester tapes 30 of the closed test piece 40 are hooked to the clamps of a dynamometer; the dynamometer is started up with a peeling speed equal to 300 mm/min, at room temperature (22°C), with a direction that is perpendicular to the surfaces adhered together. The evolution of the peeling force is detected by tracing the stroke (mm)/load (N) graph. In order to quantify the peeling force it is necessary to take into consideration the portion of profile of the graph that shows a substantially constant behaviour (horizontal profile to stationary profile) which in the graph of the example of Figure 5 is indicated as the portion AB. From the graph the following values can be found: 1) the mean of the upper peaks, 2) the mean of the lower peaks, 3) the mean of the values 1) and 2). The value 3) is defined as the average peeling force at stationary of the closing element.

In accordance with the present invention, the self-adhesive elements of the fastening device consist of a film of thermoplastic material, preferably having variable thickness from 20 micrometres to 5 mm, more preferably from 50 micrometres to 2 mm. The closing elements can have the most disparate shapes as a function of the specific application. Preferably, the closing elements are in the shape of a tape. The dimensions of the closing elements can vary within wide intervals as a function of the specific use for which the fastening device is intended. In particular, in the field of clothing, the closing elements can be in the form of tapes having a length that is preferably from 1 cm to 100 cm, more preferably from 2 cm to 70 cm, and a width that is preferably from 1 cm to 20 cm, more preferably from 2 cm to 15 cm.

The closing element substantially adheres only to itself or surfaces having a similar chemical composition, whereas it has substantially no adhesion with respect to textile fibres, such as for example cotton, wool, linen, artificial or synthetic fibres (for example polyesters, polyamides, polyacrylates, rayon), etc.. The fastening is reversible, since the closing element can be removed and repositioned easily.

According to the present invention, said thermoplastic material comprises at least one thermoplastic polymer (in the rest of the description also indicated as thermoplastic base polymer) selected among:
(a) block copolymers of styrene;
(b) copolymers of ethylene with at least one C₃-C₁₂ alpha-olefin, possibly with at least one diene termonomer;
(c) copolymers of at least one butene with at least one diene (butyl rubbers), namely saturated or semi-saturated copolymers of 1-butene, 2-butene or isobutene;
(d) copolymers of ethylene obtained from the polymerization of ethylene with at least one ester having an ethylene unsaturation (comonomer) selected among: C₁-C₈ alkyl acrylates, C₁-C₈ alkyl methacrylates, and vinyl C₂-C₈ carboxylates.

In the present description and in the claims, by "phr" ("per hundred rubber") we indicate the amount of a certain component present in the thermoplastic material, expressed in parts by weight with respect to 100 parts by weight of the thermoplastic polymer.

The thermoplastic polymer is preferably not a cross-linked elastomeric material, since a possible cross-linking would lead to a substantial reduction in the mobility of the molecules and would thus prevent the desired self-adhesive properties to be obtained.

Preferably, the thermoplastic polymer is a block copolymer of styrene selected among:
styrene/ethylene/butadiene/styrene (SEBS),
styrene/ethylene/propylene/styrene (SEPS),
styrene/ethylene/butadiene/propylene/styrene (SEBPS),
styrene/butadiene/styrene (SBS),
styrene/isoprene/styrene (SIS),
styrene/isobutylene/styrene (SIBS),
or mixtures thereof.

Even more preferably, the elastomeric material is selected among SEBS, SEPS, SBS and mixtures thereof. SEBS and SEPS are particularly preferred, since the fastening element that is obtained has a greater resistance to ageing and to yellowing, for example, following exposure to UV radiation.

The aforementioned block copolymers of styrene have an average molecular weight in the range 20.000-250.000 g/mol, more preferably in the range 40.000 g/mol - 250.000 g/mol, even more preferably comprised between 70.000 and 250.000 g/mol (average weight Mw).

Preferably, the thermoplastic polymer is a block copolymer of styrene having Shore A hardness (measured according to ASTM 2240 or ISO 7619) from 20 to 90, preferably from 35 to 70.

The block copolymers of styrene preferably have a styrene content that can vary from 5% to 50% by weight with respect to the weight of the elastomer, more preferably from 8% to 40%, even more preferably from 12% to 30%.

SEBS elastomers that are particularly suitable for the present invention are available on the market with the trademark Kraton^{®}-G (Shell Chemical Co.), Tuftec^{®}-H (Asahi Kasei Chemicals Co.), Calprene-H (Dynasol), Europrene SOL TH (Versalis), Septon (Kuraray).

Alternatively, the thermoplastic polymer can be selected among the copolymers of ethylene with at least one C₃-C₁₂ alpha-olefin (b). Among these the following are preferred: ethylene-propylene (EPR), ethylene-propylene-diene (EPDM), ethylene-1-butene, ethylene-1-octene and mixtures thereof. As far as the butyl rubbers (c) are concerned, the copolymers from isobutene and isoprene are particularly preferred, the isoprene being present in the copolymer in the same or lower amounts than 5% by weight, more preferably equal or lower than 3% by weight.

The diene termonomers possibly present in the copolymers (c) of the ethylene with at least one C₃-C₁₂ alpha-olefin may or may not be conjugated. Said termonomers, can be selected, for example, from: 1,3-butadiene, 1,4-hexadiene, 1-6-octadiene and the like; monocyclic or polycyclic dienes, like for example 1,4-cyclohexadiene and 5-ethylidene-2-norbornene.

As far as the copolymers of ethylene, which are obtained from the polymerization of ethylene with at least one ester having an ethylene unsaturation (comonomer) are concerned, these are generally copolymers of ethylene with at least one ester selected among C₁-C₈ (preferably C₁-C₄) alkyl acrylates, C₁-C₈ (preferably C₁-C₄) alkyl methacrylates, and vinyl C₂-C₈ (preferably C₂-C₆) carboxylates. The amount of ester present in the copolymer can vary in general from 5% to 50% by weight, preferably from 15% to 40% by weight.

Examples of C₁-C₈ acrylates and methacrylates are: ethyl acrylate, methyl acrylate, methyl methacrylate, tert-butyl acrylate, n-butyl acrylate, n-butyl methacrylate, 2-ethylhexyl acrylate, and the like.

Examples of vinyl C₂-C₈ carboxylates are: vinyl acetate, vinyl propionate, vinyl butanoate, and the like.

Said thermoplastic material also comprises at least one hydrocarbon resin as tackifier. The tackifier is selected from hydrocarbon resins that are solid at room temperature; said solid resins having a maximum softening point that is not greater than 150°C, preferably between 80°C and 110°C (measured according to the method ASTM E-28, Ring-and-ball Softening Point). In general these are aliphatic and/or aromatic resins that are obtained through polymerization of hydrocarbon cuts obtained from petroleum refining processes. The resins can be at least partially hydrogenated. They are available on the market for example under the trademarks Regalite^{™}, Eastotac^{™} (Eastman), Norsolene (Total), Escorez (Exxon), etc..

The tackifier is present in amounts from 10 to 150 phr, preferably from 10 to 100 phr.

Said thermoplastic material also comprises at least one plasticizer. The plasticizer is selected from: paraffin oils, naphthenic oils, polyolefin oils. These are generally products derived from petroleum, which are available on the market for example under the trademark Nyflex^{™} (Nynas), Ondina (Shell), OB (Roloil). The plasticizer mainly has the purpose of modulating the Shore A hardness and the modulus of elasticity of the thermoplastic material as desired according to the application requirements, facilitating the workability of its formula and of partially regulating the self-adherence characteristics of the closing element.

The plasticizer is present in amounts from 20 to 150 phr, preferably from 20 to 120 phr.

Preferably, said thermoplastic material also comprises at least one polyisobutene with medium-low molecular weight, namely having an average molecular weight (average weight Mw) that is in the range 800 - 2.500.000 g/mol, preferably in the range 1.200 - 120.000 g/mol, more preferably in the range 2.000 - 10.000 g/mol.

Preferably, the polyisobutene is present in an amount up to 100 phr, preferably from 10 to 100 phr, more preferably from 10 to 50 phr.

Polyisobutenes of this type are for example commercialised with the trademark Oppanol^{™} B (BASF), Indopol (INEOS), Poly Butene (DAELIM).

Preferably, said thermoplastic material also comprises at least one styrene copolymer selected among SEBS, SEP or SBS with low molecular weight, preferably in the range of 10.000 - 20.000 g/mol (average by weight Mw).

Preferably, said styrene copolymer with low molecular weight is present in amounts up to 100 phr, more preferably from 30 to 100 phr, even more preferably from 30 to 80 phr.

Said thermoplastic material also comprises at least one polypropylene base additive that is selected among atactic polypropylene or ethylene-propylene copolymer wax. Preferably, the propylene-ethylene copolymer wax has a very narrow distribution of the molecular mass, in particular when synthesized through metallocene catalysis processes. Moreover, said wax generally has a high level of amorphicity.

Preferably, the propylene-ethylene copolymer wax has an average molecular weight (average by weight Mw) in the range 1000 - 120.000 g/mol. One example of propylene-ethylene copolymer wax that is available on the market is the product Licocene^{™} (CLARIANT).

The polypropylene base additive is present in an amount from 10 to 80 phr, preferably from 30 to 80 phr.

The addition of the aforementioned components (in particular of plasticisers, polyisobutene, polypropylene base additive and the possible block copolymers of styrene with low molecular weight to the thermoplastic base polymer mainly makes it possible to enhance and modulate the adhesive characteristics of the material whilst still maintaining a suitable degree of surface apolarity, so as to increase the self-adhesion, i.e. the adhesion with a material substantially having the same composition. Such characteristics, moreover, can be modulated by using mixtures of thermoplastic base polymers having different molecular weights.

In particular, the presence of polyisobutene with medium-low molecular weight in the formula makes it possible to obtain a thermoplastic material that is characterised by having low *"lock-up"* effect of the adhesion force between the closing elements of the device. This means that, even when the device remains closed for a certain period of time, the adhesion between the two closing elements, although increasing, does not reach values such as to create substantial problems that prevent the device from operating properly. Even after a certain period of time (for example, 60 days), the device can again be opened and closed by applying a peeling force that is acceptable and without there being the delamination of the closing element from the substrate with which it is coupled.

Without referring to any particular theory, it is believed that the presence of polyisobutene in the formula makes it possible to use a small amount of tackifier, thus limiting the *lock-up* phenomenon. The replacement of part of the tackifier (e.g. hydrocarbon resins) with the polyisobutene also has the effect of reducing the overall polarity of the thermoplastic material, while still maintaining an adhesive capability that is useful for the initial triggering of the self-adhesion of the closing elements to one another.

The surface apolarity of the thermoplastic material reduces the adhesion of fibres, dirt and dust, thus keeping the fastening device clean for a longer time and in any case making it easier to clean. The cleanliness of the surfaces of the closing elements is of fundamental importance so as to ensure good adhesion at the moment of contact, since the interposition of extraneous materials can impede the adhesion. Another advantage of a suitable level of surface apolarity is that of enhancing the hydrorepellence characteristic of the surface that is useful for making the closure perform better when in the presence of water and/or humidity.

Moreover, the reduction of polarity of the thermoplastic material is accompanied by a considerable lowering of the overall glass transition temperature (Tg) of the thermoplastic material with a consequent improvement in the mechanical performance and of self-adherence at low temperatures.

The thermoplastic material can possibly comprise other additives, such as: antioxidants, dyes, pigments, UV stabilizers, reinforcing fillers, etc..

The production of the closing element according to the present invention can be carried out according to conventional methods in the field of processing thermoplastic products (extruders, casters, mixers, drawers, etc.). For example the thermoplastic material is produced by mixing the thermoplastic polymer, in the molten state, with at least one of the additives indicated above, and it is subsequently extruded, coextruded, calendered, spread with a doctor knife or printed in film or strip so as to obtain a self-adhesive thermoplastic product having the desired thickness from which to finally obtain the self-adhesive matrix with a suitable shape. A great advantage of the self-adhesive material thus obtained lies in the fact that it can be welded directly onto the support of the closure simply through heat-pressing with, for example, a flat press with a heated pressing plate. Alternatively, the product, when being extruded, calendered, spread with a doctor knife or printed can be directly deposited on a textile support, or on a sheet of other material, obtaining the composite element "support/self-adhesive material" from which the closing element is then obtained through cutting and subsequent processing.

The closing elements of the present invention have special characteristics of high elasticity and adaptability to different supports that are elastic and/or soft to a greater or lesser extent, especially in the field of clothing, such as to ensure that the garment has high comfort in addition to improving, in some cases, its finishing appearance. As previously mentioned, they have consistent adhesion only on surfaces that are made up of the same material or of a material with similar composition, whereas they do not adhere in an appreciable manner to other surfaces like for example fabrics (which may or may not be raised), on wadding, on natural or synthetic fur and on leather.

Once it has been detached from the corresponding element, the closing element according to the present invention keeps its self-adhesive characteristics substantially unvaried and can thus be made to adhere again to the same or similar surface a great number of times. For the purposes of the present invention, by the expression "substantially unvaried adhesive characteristics" we mean that the peeling force, measured after carrying out a certain number of "attachment-detachment" cycles of a first closing element from a second closing element having the same composition is in general equal to 80% of the initial peeling force ("percentage efficiency of peeling force").

The value of "percentage efficiency of peeling force" is given by the percentage ratio between the end peeling force value and the initial peeling force value that have been measured, respectively, after and before carrying out "attachment-detachment" cycles as described in the rest of the description.

For the purposes of the present invention the deterioration of the peeling force (or percentage efficiency of peeling force) following repeated attachment-detachment operations is evaluated by comparing the peeling force at 90° measured on a test piece 40 (figure 4), which has been prepared according to the methods that have previously been defined, with the peeling force measured on the same test piece at the eleventh attachment-detachment cycle, namely after this has undergone 10 consecutive attachment-detachment cycles and after resting for 15 minutes from the end of the last cycle (with the hems separated from one another while resting). In each attachment operation, the strips 20 of the test piece 40 are made to adhere to one another through pressing in the same conditions as described for the measuring process of the peeling force at 90°; the peeling operation of the strips 20 is carried out manually. At the end of the tenth consecutive attachment-detachment operation of the strips 20, the test piece 40 undergoes a measuring of the peeling force at 90°, according to the measuring procedure that was previously described: (a) immediately at the end of the tenth operation; (b) at the end of the eleventh operation carried out after resting, with hems that are separated from one another, for 5 minutes; (c) at the end of the eleventh operation carried out after resting, with hems that are separated, for 15 minutes from the tenth operation.

The adhesive characteristics of the closing element according to the present invention are kept substantially unvaried even after the fastening device has undergone a certain number of washing cycles or thermal excursion cycles or an accelerated ageing test.

For the purposes of the present invention, the deterioration of the peeling force at 90° (or percentage efficiency of peeling force) after repeated washing is evaluated by measuring the peeling force at 90° of a test piece 40, which has been prepared according to the methods that have been previously defined, after this has undergone five subsequent washes in a domestic type washing machine, each lasting 70 min, at 40 °C, with a centrifugal speed equal to 800 rpm, using 75 ml of a standard liquid soap. At the end of the fifth wash, the test piece is left to dry exposed to air for 24 hours and, therefore, undergoing a measuring of the peeling force at 90° as previously described.

For the purposes of the present invention, the deterioration of the peeling force at 90° (or percentage efficiency of peeling force) after a thermal excursion cycle between -10°C and +40°C is evaluated in the following manner. On a test piece 40, prepared according to the methods described previously, after the strips 20 have been coupled with one another (closed test piece), the peeling force is measured at 90° (initial peeling force). After a new operation in which the strips 20 are attached, the closed test piece 40 is kept in a refrigerator at a temperature of -10°C for around 24 hours. At the end of the conservation period at this temperature, the peeling force is measured on the test piece 40 at 90° according to the previously described measuring procedure. The test piece 40 is again closed by attaching the strips 20 to one another, following the procedure described above, and is arranged in an oven at +40°C for around 24 hours. At the end of the period of conservation at this temperature, the peeling force is again measured on the test piece 40 at 90° at room temperature.

For the purposes of the present invention, the age resistance is evaluated by measuring the deterioration of the peeling force at 90° (or percentage efficiency of peeling force) of a test piece 40, which has been prepared according to the modalities defined previously, after its adhesive surfaces have undergone an accelerated ageing test according to the standard ISO 105 B02, with a Fadeometer apparatus, which irradiates the test piece with a carbon arc lamp at U.R. = 85% and T = 60°C up to 5 on the blue scale (equivalent to 120 hours of exposure).

The fastening device according to the present invention does not yellow in a substantial manner after long periods of exposure to sunlight and has low adherence to fabric threads, dust or other residual material. For this reason, the effectiveness of the fastening between the closing elements according to the present invention remains substantially unvaried for a long period of time in conditions of normal use.

Thanks to the performance characteristics shown above, the fastening device of the present invention can advantageously be used to fasten portions of fabric items, such as garments and clothing accessories (jumpers, shirts, trousers, caps, jackets, etc.), curtains, carpets, armchair and sofa covers, to one another.

The coupling between each closing element and the relative portion, which must then be fastened to the corresponding opposite portion, can be made in various ways, based upon the type of item considered. The closing element can be coupled with the relative portion through thermo-welding, printing, lamination, extrusion, calendering, spreading with a doctor knife or drawing. In order to optimise the thermo-welding operation it can be possibly foreseen to co-extrude a suitable thermo-adhesive substance on a face of the thermoplastic element. Thermo-welding is particularly advantageous in the case of items made from textile material and can be carried out through heat pressing of the closing element in contact with the surface of the portion to be coupled, so as to obtain at least one partial melting of the thermoplastic material which constitutes the closing element, which partially penetrates between the yarns of the textile material or inside the support structure in the case of other materials.

Alternatively, the coupling between closing element and portion to be fastened can be made with mechanical means, such as stitching, crimping, or with an adhesive.

In one embodiment of the invention, the closing elements can be preliminarily coupled with a mounting support (for example a fabric or a woven-non woven fabric), which is then joined to the portion to be fastened with conventional means.

As already indicated above, the possible dust residues, fabric threads or other material that possibly adhere to closing elements can be easily removed through washing in water with common detergents. The washing, moreover, deteriorates in a negligible manner the adhesive characteristics of the closing element, which can therefore be used again a large number of times.

The elasticity of the thermoplastic material which constitutes the closing elements makes it possible for the latter to be used on a wide range of materials and fabrics, including those that are highly elastic, for example spandex fabrics (or elastam) which are known on the market, for example, with the trademark LYCRA^{®}. Such a result cannot be achieved with fastening systems known at the state of the art (for example, those like Velcro^{®}, buttons and zippers), due to their poor elasticity or absence thereof.

For the purposes of the present invention, the elastic properties of the thermoplastic material that constitutes the closing elements are characterised with two methods indicated below: 1) Measuring of the performance of elastic return of the thermoplastic film according to the method ASTM D412-A; 2) Measuring the elastic modulus according to the method ISO 527-3/2/200.

For the purposes of the present invention, the elastic return performance of the thermoplastic film according to the method ASTM D412-A is evaluated by measuring the residual longitudinal stretching or permanent residual deformation of a sample portion with predetermined geometry and thickness (length 50 mm, width 10 mm and thickness 0.2 mm) after it has suffered a stretching in the direction of its length, by a defined amount for a predefined period of time; once such a period has finished, the sample is released and the recovery of the longitudinal dimension is measured according to predetermined resting times and the elastic recovery is calculated according to the formula (Lf-Li)*100/Li where Li is the initial length of the test piece (50 mm) and Lf is the end length after the stretching has finished and after the predetermined resting time.

Preferably, the thermoplastic material of the closing element has an elastic modulus (measured at a stretching equal to 300% of the length of the test piece according to the method ISO 527-3/2/200) in the range 0.1 - 10 MPa, preferably in the range 0.3 - 1 Mpa.

The fastening devices according to the present invention, for example of the type illustrated schematically in figure 1, can be coupled, as a replacement for buttons, zippers, clips, hooks and magnet closing systems, with other items in addition to those strictly for clothing, like for example curtains, bags, handbags, shoes, carpets, car mats, covers for armchairs and sofas, etc., by conceiving suitable geometries of the device, with the precise purpose of tackling specific and particular performance requirements that can be defined each time.

With reference to figure 1, the fastening device (1) made in accordance with the present invention can be defined as of the "kiss" type, since the adhesion between the two closing elements (2, 3) is obtained by simply resting one closing element (2, 3) on the other and by exerting a slight pressure on them with fingers. The closure and reopening of the fastening device (1) can be made repeatedly, without substantially losing the effect of self-adherence between the two closing elements (2, 3).

Advantageously, the two closing elements (2, 3) are coupled to the respective opposite portions (4, 5) through a first face thereof (not visible in the figures), whereas their respective second faces (6, 7) can be reciprocally engaged with one another through mutual adhesion when they are subjected to a slight pressure, thanks to the reversible self-adhesion properties that characterise the thermoplastic material that constitutes the closing elements (2, 3).

The following embodiments are provided purely to illustrate the present invention and must not be intended to limit the invention in the field of protection defined by the attached claims.

### EXAMPLES 1-3 (not according to the invention).

The polymer compositions of the components indicated in Table 1 have been produced (amounts expressed in phr) with a co-rotating twin screw mixer:

**TABLE 1**

| | **Formula 1 phr** | **Formula 2 phr** | **Formula 3 phr** |
|---|---|---|---|
| Kraton G1652 | 100 | 100 | 100 |
| Naft.Oil Nyflex 222B | 100 | 100 | 100 |
| Oppanol B11 SFN | 20 | 30 | 45 |
| Eastotac H100L | 65 | 65 | 65 |
| Tinuvin P | 0.28 | 0.28 | 0.28 |
| Irganox 1010 | 0.28 | 0.28 | 0.28 |
| Irgafos 168 | 0.28 | 0.28 | 0.28 |

| | | | |
|---|---|---|---|
| **Kraton^{®} G1652** : SEBS (styrene/ethylene/ butene/styrene) copolymer with styrene content equal to 30%; hardness (ASTM 2240 Shore A 10 sec) = 70; **Nyflex^{®}** 222B : paraffinic/naphthenic oil (density = 0.89 g/cm3 at 15°C) **Oppanol**^{®} B 10 SFN : polyisobutene having average molecular weight M_{w} = 36.000 g/mol; **Eastotac^{®} H-100W** : hydrogenated hydrocarbon resin, having softening point (measured according to the method ASTM E-28, Ring-and-ball Softening Point) = 100°C; **Tinuvin^{®} P:** benzotriazole based UV filter. **Irganox^{®} 1010:** sterically hindered primary phenolic antioxidant. **Irgafos^{®} 168:** secondary phosphite antioxidant. | | | |

Each composition was extruded in the form of a tape with a thickness equal to 400 µm. Two adhesive strips with dimensions 40x150 mm were obtained from the tape. The two strips were thus fixed to two respective portions of polyester fabric, so that the long side of one portion is in the same direction as the weft (warp
of the polyester fabric: 17 threads/cm; weft: 24 picks/cm; dtex: 400; count: 360 denier) obtaining two elements of the fastening device.

On the elements of the fastening devices obtained with the different compositions indicated in the table, the following tests were carried out:
1) Peeling force at 90° (defined as the initial peeling force)
2) deterioration of the peeling force at 90° after repeated attachment/detachment operations
3) deterioration of the peeling force at 90° after repeated washing
4) deterioration of the peeling force at 90° after heat cycles
5) Age resistance
6) Measurement of the elastic return performance of the closing element according to the method ASTM D412-A and measurement of the elastic modulus according to the method ISO 527-3/2/200. The elastic behaviour of the compositions was measured on test pieces having strips with a thickness of 200 micrometers (micron) and a width of 15 mm.

The results of the measurements carried out are shown in Tables 2, 3 and 4.

**TABLE 2 - Initial Peeling Force**

| | **Sh A Hardness** | **Elongation Modulus 300% MPa_{(ISO 527-3/2/200)}** | **Peeling test N/mm** |
|---|---|---|---|
| **Formula 1** | 27 | 0.58 | 0.026 |
| **Formula 2** | 25 | 0.56 | 0.030 |
| **Formula 3** | 20 | 0.51 | 0.034 |

**TABLE 3 - deterioration of the peeling force after 10 attachment-detachment cycles**

| | Peeling test **N/mm (efficiency % of peeling force )** | | |
|---|---|---|---|
| | **Straight after the test** | **5 minutes after the test** | **15 minutes after the test** |
| **Formula 1** | 0.012 (46%) | 0.019 (73%) | 0.025 (96%) |
| **Formula 2** | 0.012 (40%) | 0.022 (73%) | 0.027 (90%) |
| **Formula 3** | 0.017 (50%) | 0.027 (79%) | 0.033 (97%) |

**TABLE 4 - deterioration of the peeling force**

| | Peeling test after 5 washes **N/mm and (efficiency %).** | Peeling test after "thermal conditioning" | | Peeling test after ageing _{ISO 105 B02} **N/mm (efficiency %)** |
|---|---|---|---|---|
| | | **24h at +40°C N/mm (efficiency %)** | **24h at -10°C N/mm (efficiency %)** | |
| **Formula 1** | 0.026 (100%) | 0.027 (104%) | 0.022 (85%) | 0.026 (100%) |
| **Formula 2** | 0.028 (93%) | 0.032 (106%) | 0.026 (87%) | 0.028 (93%) |
| **Formula 3** | 0.032 (94%) | 0.034 (100%) | 0.030 (88%) | 0.036 (106%) |

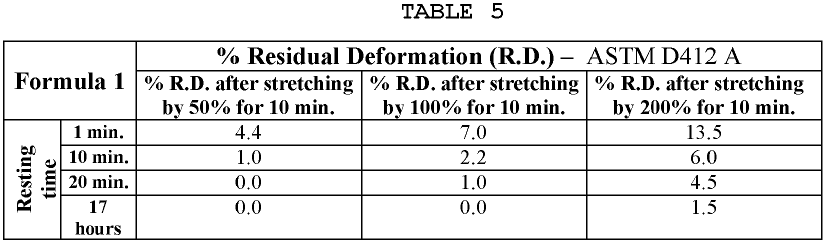

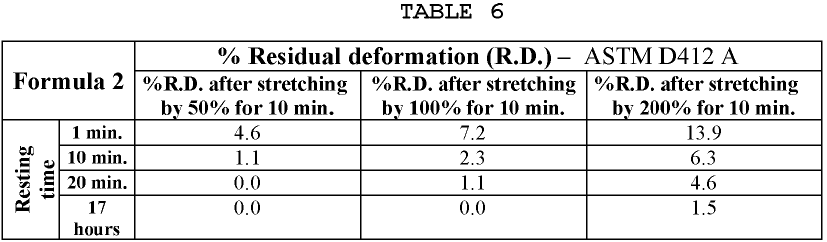

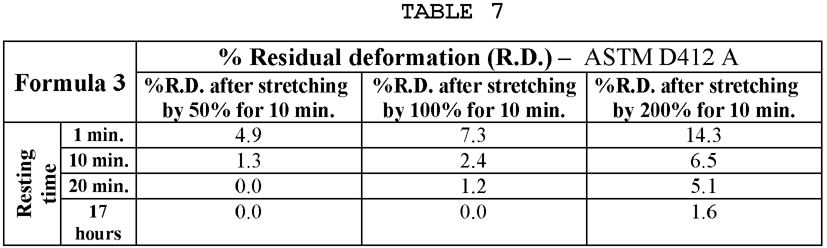

As can be noted, the variations in the peeling force at 90° after the 10 attachment/detachment cycles (and 15 minutes rest), after the 5 washing cycles, after the heat cycles and after ageing according to ISO 105 B02, have a deterioration that is not greater than 20% of the initial force value, and in any case the value is never lower than the value of 0.005 N/mm that can be defined as the minimum limit for a suitable closing performance.

As far as the test relating to the residual deformation after predetermined stretching of 10 minutes of the test pieces is concerned, in all 3 formulas the elastic recovery is reasonably complete and in any case poorly affected by the formula variations that were adopted.

### EXAMPLES 4-6 (not according to the invention).

The polymer compositions of the components indicated in TABLE 5 were produced (amounts expressed in phr) through co-rotating twin screw mixer:

**TABLE 8**

| | **Formula 4 Phr** | **Formula 5 phr** | **Formula 6 phr** |
|---|---|---|---|
| Kraton G1652 | 70 | 70 | 70 |
| Calprene H6110 | 30 | 30 | 30 |
| Naft.Oil Shell Ondina 933 | 80 | 100 | 120 |
| Regalite R1100 | 65 | 65 | 65 |
| Regalite R1010 | 5 | 5 | 5 |
| Tinuvin P | 0.28 | 0.28 | 0.28 |
| Irganox 1010 | 0.28 | 0.28 | 0.28 |
| Irgafos 168 | 0.28 | 0.28 | 0.28 |

| | | | |
|---|---|---|---|
| **Kraton^{®} G1652** : SEBS (styrene/ethylene/ butene/styrene) copolymer with styrene content equal to 30%; hardness (ASTM 2240 Shore A 10 sec) = 70; **Calprene^{®} H6110** : SEBS (styrene/ethylene/ butene/styrene) copolymer with styrene content equal to 30%; hardness (ASTM 2240 Shore A 10 sec) = 76; **Shell Ondina^{®} 933** : paraffinic/naphthenic oil (density = 0.89 g/cm³ at 15°C) **Regalite^{®} R1100** : hydrogenated hydrocarbon resin, having softening point (measured according to the method ASTM E-28, Ring-and-ball Softening Point) = 100°C; **Regalite^{®} R1010** : hydrogenated liquid hydrocarbon resin (viscosity Brookfield LVTD, spindle 31, 50°C = 1000-5000 mPa·sec); **Tinuvin^{®} P:** Benzotriazole based UV filter. **Irganox^{®} 1010:** sterically hindered primary phenolic antioxidant. **Irgafos^{®} 168:** secondary phosphite antioxidant. | | | |

For each composition the same tests illustrated above for the example 1-3 were carried out. The results are shown in Tables 6, 7 and 8.

**TABLE 9 - Initial Peeling Force**

| | Hardness **Sh A** | Elongation Modulus 300% **MPa _{(ISO 527-3/2/200)}** | Peeling test N/mm |
|---|---|---|---|
| **Formula 4** | 27 | 0.55 | 0.024 |
| **Formula 5** | 19 | 0.46 | 0.035 |
| **Formula 6** | 17 | 0.41 | 0.027 |

**TABLE 10 - deterioration of the peeling force after 10 attachment-detachment cycles**

| | Peeling test **N/mm (efficiency % of peeling force)** | | |
|---|---|---|---|
| | **Straight after the test** | **5 minutes after the test** | **15 minutes after the test** |
| **Formula 4** | 0.015 (63%) | 0.020 (83%) | 0.024 (100%) |
| **Formula 5** | 0.020 (57%) | 0.027 (77%) | 0.033 (94%) |
| **Formula 6** | 0.016 (59%) | 0.022 (81%) | 0.026 (96%) |

**TABLE 11 - deterioration of the peeling force**

| | Peeling test after 5 washes **N/mm (efficiency %)** | Peeling after "thermal conditioning" | | Peeling after ageing _{ISO 105 B02} **N/mm and (efficiency %)** |
|---|---|---|---|---|
| | | **24h at +40°C N/mm and (efficiency %)** | **24h at -10°C N/mm (efficiency %)** | |
| **Formula 4** | 0.021 (88%) | 0.023 (96%) | 0.020 (83%) | 0.023 (96%) |
| **Formula 5** | 0.031 (89%) | 0.035 (100%) | 0.029 (83%) | 0.035 (100%) |
| **Formula 6** | 0.025 (93%) | 0.024 (89%) | 0.022 (81%) | 0.025 (104%) |

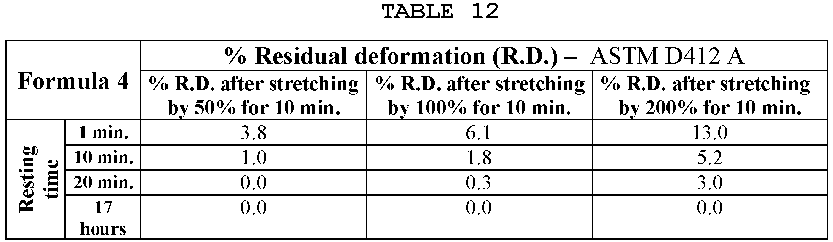

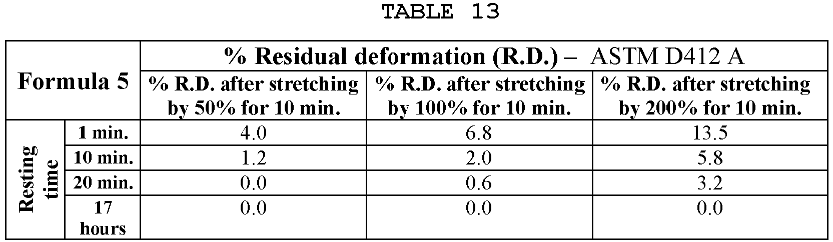

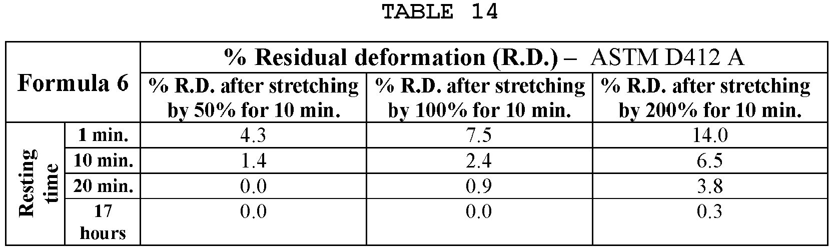

As can be noted, the variations in the peeling force at 90° after the 10 attachment/detachment cycles (and 15 minutes resting time), after the 5 washing cycles, after the heat cycles and after ageing according to ISO 105 B02, have a deterioration that is not greater than 20% of the initial force value, and in any case the value is never lower than the value 0.005 N/mm that can be defined as the minimum limit for a suitable closing performance.

As far as the test relating to the residual deformation after predetermined stretching of 10 minutes of the test pieces are concerned, in all three of the formulas the elastic recovery is reasonably complete and in any case poorly affected by the formula variations that were adopted.

### EXAMPLES 7-8.

The polymer compositions of the components indicated in Table 9 were obtained (amounts expressed in phr) through co-rotating twin screw mixer:

**TABLE 15**

| | **Formula 7 Phr** | **Formula 8 phr** |
|---|---|---|
| Europrene SOL TH 2312 | 70 | 70 |
| Calprene H6110 | 30 | 30 |
| Naft.Oil Shell Ondina 933 | 100 | 100 |
| Licocene PP 1302 | 20 | 35 |
| Regalite R1100 | 68 | 68 |
| Tinuvin P | 0.28 | 0.28 |
| Irganox 1010 | 0.28 | 0.28 |
| Irgafos 168 | 0.28 | 0.28 |

| | | |
|---|---|---|
| **Europrene^{®} SOL TH2312:** SEBS (styrene/ethylene/ butene/styrene) copolymer with styrene content equal to 30%; hardness (ASTM 2240 Shore A 10 sec) = 75; **Calprene^{®} H6110** : SEBS (styrene/ethylene/ butene/styrene) copolymer with styrene content equal to 30%; hardness (ASTM 2240 Shore A 10 sec) = 76; **Shell Ondina^{®} 933** : paraffinic/naphthenic oil (density = 0.89 g/cm³ at 15°C) **Licocene^{®} PP 1302** : mainly atactic propylene-ethylene copolymer based polypropylene wax (viscosity = 200 mPa·sec, measured at 170°C according to the method DIN 53019); **Regalite^{®} R1100** : hydrogenated hydrocarbon resin, having softening point (measured according to the method ASTM E-28, Ring-and-ball Softening Point) = 100°C; **Tinuvin^{®} P:** Benzotriazole based UV filter. **Irganox^{®} 1010:** sterically hindered primary phenolic antioxidant. **Irgafos^{®} 168:** secondary phosphite antioxidant. | | |

The same tests illustrated above for the examples 1-3 were carried out for each composition. The results are shown in Tables 10, 11 and 12.

**TABLE 16 - Initial Peeling Force**

| | **Sh A** Hardness | Elongation Modulus 300% **MPa** _{(ISO 527-3/2/200)} | Peeling test N/mm |
|---|---|---|---|
| **Formula 7** | 23 | 0.44 | 0.022 |
| **Formula 8** | 27 | 0.48 | 0.024 |

**TABLE 17 - deterioration of the peeling force after 10 attachment-detachment cycles**

| | Peeling test **N/mm (efficiency % of peeling force)** | | |
|---|---|---|---|
| | **Straight after the test** | **5 minutes after the test** | **15 minutes after the test** |
| **Formula 7** | 0.009 (41%) | 0.015 (68%) | 0.020 (91%) |
| **Formula 8** | 0.011 (46%) | 0.018 (75%) | 0.022 (92%) |

**TABLE 18 - deterioration of the peeling force**

| | Peeling test after 5 washes **N/mm (efficiency %)** | Peeling test after "thermal conditioning" | | Peeling test after ageing _{ISO 105 B02} **N/mm and (efficiency %)** |
|---|---|---|---|---|
| | | **24h at +40°C N/mm and (efficiency %)** | **24h at -10°C N/mm (efficiency %)** | |
| **Formula 7** | 0.020 (91%) | 0.021 (95%) | 0.018 (82%) | 0.022 (100%) |
| **Formula 8** | 0.021 (95%) | 0.023 (104%) | 0.020 (91%) | 0.024 (109%) |

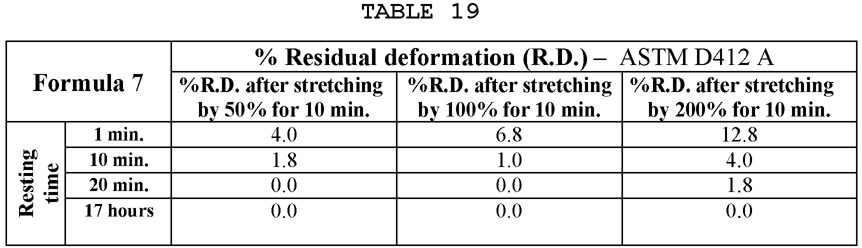

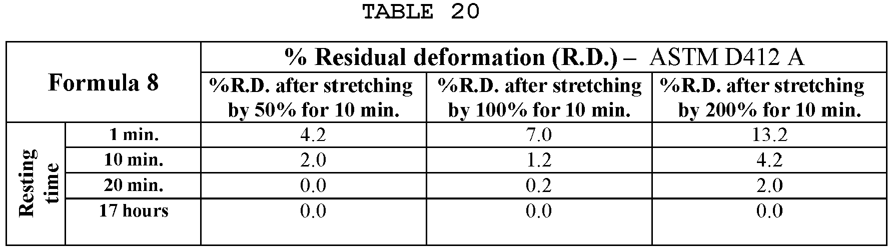

As can be noted, the variations of the peeling force at 90° after the 10 attachment/detachment cycles (and 15 minutes resting time), after the 5 washing cycles, after the heat cycles and after ageing according to ISO 105 B02, have a deterioration that is not greater than 20% of the initial force value, and in any case the value is never lower than the value of 0,005 N/mm that can be defined as minimum limit for a suitable closing performance.

As far as the test relative to the residual deformation after predetermined stretching of 10 minutes of the test pieces are concerned, in both formulas the elastic recovery is reasonably complete and in any case poorly affected by the formula variations that were adopted.

### EXAMPLES 9-12 (Examples 9-11 not according to the invention).

Polymer compositions of the components indicated in TABLE 21 (amounts expressed in phr and % by weight) were obtained through co-rotating twin screw mixer:

**TABLE 21**

| | **Formula 9** | | **Formula 10** | | **Formula 11** | | **Formula 12** | |
|---|---|---|---|---|---|---|---|---|
| | phr | wt % | phr | wt % | phr | wt % | phr | wt % |
| Kraton G1645 ⁽¹⁾ | 40.5 | 15.0 | 40.5 | 15.0 | 40.5 | 15.0 | 51.4 | 19.0 |
| Kraton G1650 ⁽¹⁾ | 59.5 | 22.0 | 59.5 | 22.0 | 59.5 | 22.0 | 48.6 | 18.0 |
| Nyflex 222B ⁽²⁾ | 73.0 | 27.0 | 73.0 | 27.0 | 73.0 | 27.0 | 73.0 | 27.0 |
| Indopol H-1900 ⁽³⁾ | 28.9 | 10.7 | 8.1 | 3.0 | - | - | 15.4 | 5.7 |
| Licocene PP | - | - | - | - | - | - | 13.5 | 5.0 |
| 1302 ⁽⁴⁾ | | | | | | | | |
| Eastotac H-100W ⁽⁵⁾ | 67.6 | 25.0 | 88.4 | 32.7 | 96.5 | 35.7 | 67.6 | 25.0 |
| Irganox 1010 ⁽⁶⁾ | 0.4 | 0.15 | 0.4 | 0.15 | 0.4 | 0.15 | 0.4 | 0.15 |
| Irgafos 168 (7) | 0.4 | 0.15 | 0.4 | 0.15 | 0.4 | 0.15 | 0.4 | 0.15 |

| | | | | | | | | |
|---|---|---|---|---|---|---|---|---|
| (1) SEBS - block copolymer (2) Paraffinic/naphthenic oil (3) Polyisobutene (PIB) (4) Plasticizer (ethylene-propylene copolymer wax) (5) Hydrogenated hydrocarbon resin (6) Phenolic antioxidant (7) Secondary phosphite antioxidant. | | | | | | | | |

In order to determine the amount of the lock-up effect on the compositions 9-12, the test pieces were closed and left as they were for two weeks. After this time, the peeling force was determined. By comparison, also the initial peeling force of each test piece was determined. The results are shown in table 22.

**TABLE 22**

| Formula | **Initial Peeling force (N/mm)** | **Peeling force after the test piece had been closed for two weeks (N/mm)** | **Increase in the adhesion after 2 weeks (%)** |
|---|---|---|---|
| 9 | 0.091 | 0.175 | 92 |
| 10 | 0.107 | 0.294 | 174 |
| 11 | 0.112 | 0.327 | 192 |
| 12 | 0.067 | 0.126 | 88 |

The results of the Table 22 show that the addition of PIB and/or of a propylene based additive makes it possible to control the extent of the block-up phenomenon (increase % of the adhesion) in the fastening devices. It has moreover been observed that the adhesion force between the elements of the device increases up to a maximum stationary value, which is reached around 12 days after the device has been closed. Such a maximum value is in any case generally lower than the value 0.5 N/mm.

## Claims

1. Fastening device between two opposite portions, which comprises a first and a second closing element, each of said closing elements being coupled through a first face with one of the two opposite portions to be fastened, a second face of said first closing element being able to be engaged with a second face of said second closing element, through reversible mutual adherence, **characterised in that** each of said closing elements consists of a thermoplastic material, having reversible adhesive properties such as to allow the detachment between said closing elements through application of a peeling force, applied with a direction perpendicular to the surfaces adhered together and speed equal to 300 mm/min, comprised between 0.005 N/mm and 0.5 N/mm, determined by the method indicated in the description and wherein said thermoplastic material comprises:
- at least one thermoplastic polymer selected among:
(a) block copolymers of styrene;
(b) copolymers of ethylene with at least one C₃-C₁₂ alpha-olefin (EPR);
(c) copolymers of at least one butene with at least one diene;
(d) copolymers of ethylene with at least one ester having an ethylene unsaturation selected among: C₁-C₈ alkyl acrylate, C₁-C₈ alkyl methacrylates and vinyl C₂-C₈ carboxylates;
- from 10 to 150 phr of at least one hydrocarbon resin as tackifier, said hydrocarbon resin being solid at room temperature and having a maximum softening point not greater than 150°C (measured according to the method ASTM E-28, Ring-and-ball Softening Point);
- from 20 to 150 phr, of at least one plasticizer selected among: paraffin oils, naphthenic oils, polyolefin oils;
- from 10 to 80 phr, of at least one propylene based additive selected among: atactic polypropylene and ethylene-propylene copolymer wax.

2. Fastening device according to claim 1, wherein the closing elements are in the form of a film of the thermoplastic material of variable thickness from 20 micrometres to 5 mm.

3. Fastening device according to any one of the previous claims, wherein said thermoplastic material has an elastic modulus measured according to the method ISO 527-3/2/200 in the range 0.1 - 10 MPa.

4. Fastening device according to any one of the previous claims, wherein said thermoplastic material is a block copolymer of styrene selected among: styrene/butadiene/styrene (SBS), styrene/ethylene/butadiene/styrene (SEBS), styrene/ ethylene/propylene/styrene (SEPS), styrene/ethylene/ butadiene/propylene/styrene (SEBPS), styrene/isoprene/ styrene (SIS), styrene/isobutylene/styrene (SIBS), or mixtures thereof.

5. Fastening device according to claim 1, wherein the thermoplastic polymer is a block copolymer of styrene having Shore A hardness (measured according to ASTM 2240 or ISO 7619) from 20 to 90.

6. Fastening device according to claim 1, wherein the thermoplastic polymer is a block copolymer of styrene having a styrene content from 5% to 50% by weight.

7. Fastening device according to any one of the previous claims, wherein said closing element is thermowelded on at least one of said opposite portions.

8. Fastening device according to any one of the previous claims, wherein said opposite portions are portions of an item made from textile material.

9. Fastening device according to claim 1, wherein said peeling force, applied with a direction perpendicular to the surfaces adhered together and speed equal to 300 mm/min, is comprised between 0.01 N/mm and 0.15 N/mm.

10. Fastening device according to claim 1, wherein said hydrocarbon resins that are solid at room temperature have a maximum softening point between 80°C and 110°C (measured according to the method ASTM E-28, Ring-and-ball Softening Point).

11. Fastening device according to claim 2, wherein said closing elements are in the form of a film of the thermoplastic material having a thickness from 50 micrometres to 2 mm.

12. Fastening device according to claim 5, wherein said thermoplastic polymer is a block copolymer of styrene having Shore A hardness (measured according to ASTM 2240 or ISO 7619) from 35 to 70.

13. Fastening device according to claim 1, wherein said thermoplastic polymer is a block copolymer of styrene having a styrene content from 8% to 40% by weight.

14. Fastening device according to claim 1, wherein said thermoplastic polymer is a block copolymer of styrene having a styrene content from 12% to 30% by weight.

15. Garment or clothing accessory comprising at least one fastening device according to any one of claims 1 to 14.

## Patentansprüche

1. Befestigungsvorrichtung zwischen zwei gegenüberliegenden Teilen, die ein erstes und ein zweites Verschlusselement umfasst, wobei jedes der Verschlusselemente über eine erste Fläche mit einem der beiden zu befestigenden gegenüberliegenden Teile gekoppelt ist, wobei eine zweite Fläche des ersten Verschlusselements durch umkehrbares gegenseitiges Kleben mit einer zweiten Fläche des zweiten Verschlusselements in Eingriff gebracht werden kann, **dadurch gekennzeichnet, dass** jedes der Verschlusselemente aus einem thermoplastischen Material besteht, das umkehrbare Klebeeigenschaften aufweist, so dass die Ablösung zwischen den Verschlusselementen durch Anwendung einer Abziehkraft möglich ist, die in einer Richtung senkrecht zu den zusammengeklebten Oberflächen und mit einer Geschwindigkeit von 300 mm/min und zwischen 0,005 N/mm und 0,5 N/mm aufgebracht wird, bestimmt durch das in der Beschreibung angegebene Verfahren, und wobei das thermoplastische Material umfasst:
- mindestens ein thermoplastisches Polymer, ausgewählt aus:
(a) Blockpolymere von Styrol;
(b) Copolymere von Ethylen mit mindestens einem C₃-C₁₂-Alpha-Olefin(EPR);
(c) Copolymere von mindestens einem Buten und mindestens einem Dien;
(d) Copolymere von Ethylen mit mindestens einem Ester mit einer Ethylen-Ungesättigtheit, ausgewählt aus: C₁-C₈-Alkylacrylat, C₁-C₈-Alkylmethacrylate und Vinyl-C₂-C₈-Carboxylate;
- 10 bis 150 phr mindestens eines Kohlenwasserstoffharzes als Klebrigmacher, wobei das Kohlenwasserstoffharz bei Raumtemperatur fest ist und einen maximalen Erweichungspunkt von nicht mehr als 150°C aufweist (gemessen nach dem Verfahren ASTM E-28, Ring-and-ball Softening Point);
- 20 bis 150 phr mindestens eines Weichmachers, ausgewählt aus: Paraffinölen, naphthenischen Ölen, Polyolefinölen;
- 10 bis 80 phr mindestens eines Additivs auf Propylenbasis, ausgewählt aus: ataktischem Polypropylen und Ethylen-Propylen-Copolymerwachs.

2. Befestigungsvorrichtung nach Anspruch 1, wobei die Verschlusselemente in Form einer Folie aus thermoplastischem Material mit einer variablen Dicke von 20 Mikrometern bis 5 mm vorliegen.

3. Befestigungsvorrichtung nach einem der vorstehenden Ansprüche, wobei das thermoplastische Material einen nach dem Verfahren ISO 527-3/2/200 gemessenen Elastizitätsmodul im Bereich von 0,1 bis 10 MPa aufweist.

4. Befestigungsvorrichtung nach einem der vorstehenden Ansprüche, wobei das thermoplastische Material ein Styrol-Blockpolymer ist, ausgewählt aus: Styrol/Butadien/Styrol (SBS), Styrol/Ethylen/Butadien/Styrol (SEBS), Styrol/Ethylen/Propylen/Styrol (SEPS), Styrol/Ethylen/Butadien/Propylen/Styrol (SEBPS), Styrol/Isopren/Styrol (SIS), Styrol/Isobutylen/Styrol (SIBS) oder Mischungen davon.

5. Befestigungsvorrichtung nach Anspruch 1, wobei das thermoplastische Polymer ein Blockpolymer von Styrol mit einer Shore-A-Härte (gemessen nach ASTM 2240 oder ISO 7619) von 20 bis 90 ist.

6. Befestigungsvorrichtung nach Anspruch 1, wobei das thermoplastische Polymer ein Blockpolymer von Styrol mit einem Styrolgehalt von 5 bis 50 Gew.-% ist.

7. Befestigungsvorrichtung nach einem der vorstehenden Ansprüche, wobei das Verschlusselement an mindestens einem der gegenüberliegenden Teile thermisch verschweißt ist.

8. Befestigungsvorrichtung nach einem der vorstehenden Ansprüche, wobei die gegenüberliegenden Teile Teile eines Gegenstandes aus textilem Material sind.

9. Befestigungsvorrichtung nach Anspruch 1, wobei die Abziehkraft, die in einer Richtung senkrecht zu den zusammengeklebten Oberflächen und mit einer Geschwindigkeit von 300 mm/min aufgebracht wird, zwischen 0,01 N/mm und 0,15 N/mm liegt.

10. Befestigungsvorrichtung nach Anspruch 1, wobei die Kohlenwasserstoffharze, die bei Raumtemperatur fest sind, einen maximalen Erweichungspunkt zwischen 80 °C und 110 °C aufweisen (gemessen nach dem Verfahren ASTM E-28, Ring-and-ball Softening Point).

11. Befestigungsvorrichtung nach Anspruch 2, wobei die Verschlusselemente in Form einer Folie aus dem thermoplastischen Material mit einer Dicke von 50 Mikrometern bis 2 mm vorliegen.

12. Befestigungsvorrichtung nach Anspruch 5, wobei das thermoplastische Polymer ein Blockpolymer von Styrol mit einer Shore-A-Härte (gemessen nach ASTM 2240 oder ISO 7619) von 35 bis 70 ist.

13. Befestigungsvorrichtung nach Anspruch 1, wobei das thermoplastische Polymer ein Blockpolymer von Styrol mit einem Styrolgehalt von 8 bis 40 Gew.-% ist.

14. Befestigungsvorrichtung nach Anspruch 1, wobei das thermoplastische Polymer ein Blockpolymer von Styrol mit einem Styrolgehalt von 12 bis 30 Gew.-% ist.

15. Kleidungsstück oder Bekleidungszubehör, umfassend mindestens eine Befestigungsvorrichtung nach einem der Ansprüche 1 bis 14.

## Revendications

1. Dispositif de fixation entre deux portions opposées, qui comprend un premier et un second élément de fermeture, chacun desdits éléments de fermeture étant couplé par une première face avec l'une des deux portions opposées à fixer, une seconde face dudit premier élément de fermeture pouvant être engagée avec une seconde face dudit second élément de fermeture, par adhérence mutuelle réversible, **caractérisé en ce que** chacun desdits éléments de fermeture est constitué d'un matériau thermoplastique, ayant des propriétés adhésives réversibles de manière à permettre le détachement entre lesdits éléments de fermeture par l'application d'une force de décollement, appliquée avec une direction perpendiculaire aux surfaces collées ensemble et une vitesse égale à 300 mm/min, comprise entre 0.005 N/mm et 0,5 N/mm, déterminée par la méthode indiquée dans la description et dans lequel ledit matériau thermoplastique comprend:
- au moins un polymère thermoplastique choisi parmi:
(a) les copolymères à blocs de styrène;
(b) les copolymères d'éthylène avec au moins une alpha-oléfine en C₃-C₁₂ (EPR;
(c) les copolymères d'au moins un butène avec au moins un diène;
(d) les copolymères d'éthylène avec au moins un ester ayant une insaturation éthylénique choisis parmi: acrylate d'alkyle en C₁-C₈, méthacrylates d'alkyle en C₁-C₈ et carboxylates de vinyle en C₂-C₈;
- de 10 à 150 phr d'au moins une résine hydrocarbonée comme agent poisseux, ladite résine hydrocarbonée étant solide à température ambiante et ayant un point de ramollissement maximal non supérieur à 150 °C (mesuré selon la méthode ASTM E-28, Point de ramollissement bille et anneau);
- de 20 à 150 phr, d'au moins un plastifiant choisi parmi: les huiles paraffiniques, les huiles naphténiques, les huiles polyoléfiniques;
- de 10 à 80 phr, d'au moins un additif à base de propylène choisi parmi: le polypropylène atactique et la cire de copolymère d'éthylène-propylène.

2. Dispositif de fixation selon la revendication 1, dans lequel les éléments de fermeture se présentent sous la forme d'un film du matériau thermoplastique d'épaisseur variable de 20 micromètres à 5 mm.

3. Dispositif de fixation selon l'une quelconque des revendications précédentes, dans lequel ledit matériau thermoplastique présente un module d'élasticité mesuré selon la méthode ISO 527-3/2/200 dans la gamme 0,1 -10 Mpa.

4. Dispositif de fixation selon l'une quelconque des revendications précédentes, dans lequel ledit matériau thermoplastique est un copolymère à blocs de styrène choisi parmi : le styrène/butadiène/styrène (SBS), le styrène/éthylène/butadiène/styrène (SEBS), le styrène/éthylène/propylène/styrène (SEPS), le styrène/éthylène/butadiène/propylène/styrène (SEBPS), le styrène/isoprène/styrène (SIS), le styrène/isobutylène/styrène (SIBS), ou leurs mélanges.

5. Dispositif de fixation selon la revendication 1, dans lequel le polymère thermoplastique est un copolymère à blocs de styrène ayant une dureté Shore A (mesurée selon la norme ASTM 2240 ou ISO 7619) de 20 à 90.

6. Dispositif de fixation selon la revendication 1, dans lequel le polymère thermoplastique est un copolymère à blocs de styrène ayant une teneur en styrène de 5 % à 50 % en poids.

7. Dispositif de fixation selon l'une quelconque des revendications précédentes, dans lequel ledit élément de fermeture est thermosoudé sur au moins une desdites portions opposées.

8. Dispositif de fixation selon l'une quelconque des revendications précédentes, dans lequel lesdites portions opposées sont des portions d'un article réalisé en matière textile.

9. Dispositif de fixation selon la revendication 1, dans lequel ladite force de décollement, appliquée avec une direction perpendiculaire aux surfaces collées ensemble et une vitesse égale à 300 mm/min, est comprise entre 0,01 N/mm et 0,15 N/mm.

10. Dispositif de fixation selon la revendication 1, dans lequel lesdites résines hydrocarbonées qui sont solides à température ambiante ont un point de ramollissement maximal compris entre 80 °C et 110 °C (mesuré selon la méthode ASTM E-28, Point de ramollissement bille et anneau).

11. Dispositif de fixation selon la revendication 2, dans lequel lesdits éléments de fermeture se présentent sous la forme d'un film du matériau thermoplastique ayant une épaisseur de 50 micromètres à 2 mm.

12. Dispositif de fixation selon la revendication 5, dans lequel ledit polymère thermoplastique est un copolymère à blocs de styrène ayant une dureté Shore A (mesurée selon la norme ASTM 2240 ou ISO 7619) de 35 à 70.

13. Dispositif de fixation selon la revendication 1, dans lequel ledit polymère thermoplastique est un copolymère à blocs de styrène ayant une teneur en styrène de 8% à 40% en poids.

14. Dispositif de fixation selon la revendication 1, dans lequel ledit polymère thermoplastique est un copolymère à blocs de styrène ayant une teneur en styrène de 12% à 30% en poids.

15. Vêtement ou accessoire vestimentaire comprenant au moins un dispositif de fixation selon l'une quelconque des revendications 1 à 14.
